# EUROPEAN PATENT SPECIFICATION

(11) **EP 1 384 011 B1**
(45) Date of publication and mention of the grant of the patent: **23.11.2005**
(21) Application number: 02730682.8
(22) Date of filing: 17.05.2002
(51) Int. Cl.: F16D 65/12

(54) **A BRAKING BAND FOR A BRAKE DISK**
BREMSBAND FÜR EINE BREMSSCHEIBE
BANDE DE FREINAGE POUR FREIN A DISQUE

(30) Priority: 28.05.2001 WO PCT/IT01/00274
(43) Date of publication of application: 28.01.2004
(73) Proprietor: Freni Brembo S.p.A., 24035 Curno (Bergamo) (IT)
(72) Inventor: MERONI, Giuseppe, I-22053 Lecco (IT); RAVASIO, Simone, I-24030 Barzana (Bergamo) (IT); OBERTI, Leone, I-24010 Lenna (Bergamo) (IT)
(74) Representative: Siniscalco, Fabio
(86) International application number: PCT/IT2002/000324
(87) International publication number: WO 2002/097293

(56) References cited:
- EP-A- 0 874 180
- EP-A- 1 048 874
- DE-U- 7 906 416
- JP-A- 10 026 159
- JP-A- 2000 161 402
- US-A- 2 368 621
- US-A- 3 301 356
- US-A- 5 735 366
- US-A- 5 878 479
- US-B1- 6 186 293
- US-B1- 6 216 827

## Description

The subject of the present invention is a braking band for a disk-brake disk.

A known type of disk-brake disk comprises substantially a support bell to be connected, for example, to the wheel hub of a vehicle. A braking band, which cooperates with the calipers to exert the braking force on the vehicle, is connected to the bell by means of a connection. In so-called solid disks, the braking band comprises a single plate with two parallel outer surfaces which constitute the friction braking surfaces. In self-ventilated disks, the braking band typically comprises at least two parallel plates, separated by connecting elements which hold them together. The space between the plates forms a ventilation duct. By virtue of the circulation of air between the plates, the disk is cooled, both on the outer sides, as in a solid disk, and on the inner sides of the braking band.

As is known, during a braking operation, these disks may be subject to vibrations which translate into annoying squeals. A known approach for preventing this noise due to the vibrations of the brake disk consists in the formation of circular channels which are produced in the braking surfaces of the braking band by turning. By changing the stiffness of the brake disk locally in this way its dynamic characteristics can be changed in a manner such as to shift the natural frequencies of the disk away from the frequencies which are excited during braking.

A disk of this type is described, for example, in EP 1048 874 A1 and US 2,368,621.

However, these circular channels in the braking surfaces of the braking band lead to technological and structural problems which relate to the acoustic and mechanical behaviour of the disk, as well as to the type of pad required by a partially interrupted braking surface.

In fact, with annular channels which are concentric with the axis of symmetry of the brake disk, it is necessary to use special pads, for example, pads with cut-out portions in the region of the channels.

Moreover, whereas the circular channels have been found advantageous with regard to the attenuation of radial vibrations, they cannot reduce circumferential vibrations of the brake disk.

From US 5 735 366 a disk brake rotor is known with a plurality of radial groves on its opposite sides that are equiangularly spaced. US 6 186 293 discloses a brake disk with a wave-shaped grove and JP-A-10026159 discloses brake disks with discontinuous channels extending along circles concentric with the axis of symmetry of the disk.

The object of the present invention is therefore to propose a braking band for a disk-brake disk which has structural and functional characteristics such as to permit silent braking and to overcome the problems mentioned above with reference to the prior art.

This object is achieved by means of a braking band according to Claim 1.

For a better understanding of the invention, some possible non-limiting embodiments are described below and illustrated in the appended drawings, in which:
Figure 1 is an axonometric view of a brake disk according to the invention,
Figure 2 is a radial section through the disk of Figure 1,
Figure 3 is a front view of a further brake disk according to the invention,
Figure 4 is a view sectioned on the line IV-IV of Figure 3,
Figure 5 shows a further brake disk according to the invention, in radial section,
Figure 6 is a front view of the brake disk of Figure 5, sectioned on the line VI-VI,
Figures 7 and 8 show, in perspective views, the regions of intersection between a connecting element and a channel within a self-ventilated braking band, according to two embodiments of the invention,
Figure 9 shows cross-sections with particularly advantageous shapes for channels of a braking band according to the invention, and
Figures 10 to 12 are front views of further embodiments of the braking band according to the invention.

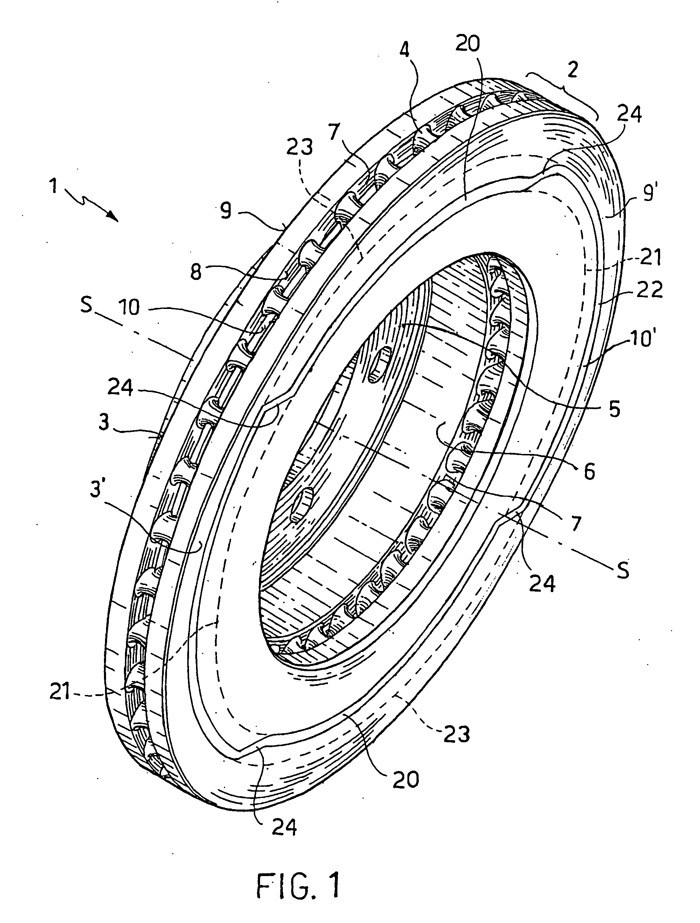

With reference to Figure 1, a brake disk of a disk brake is generally indicated 1. The disk 1 extends about an axis of symmetry s. The axis of symmetry s also constitutes the axis of rotation of the brake disk 1. The brake disk 1 comprises a braking band 2 which comprises two plates 3 and 3', connected to one another by connecting elements 4. The braking band 2 is supported by a bell 5, by means of a connection 6. The bell 5 is disposed in the centre of the brake disk 1 and can be connected to a vehicle hub by connection means. In a self-ventilated disk, the lateral surfaces 8, 8', 9, 9' of each of the plates 3, 3' comprise, an outer friction surface 9, 9' and an inner surface 8, 8', remote from the outer surface 9, 9' and delimiting a ventilation duct 7. In a solid disk, both of the two opposed lateral surfaces 9, 9' of the single plate 3 form the outer friction surfaces 9, 9' of the braking band 2. At least one of the lateral surfaces 8, 8', 9, 9' has a substantially annular channel 10, 10' which divides the lateral surface 8, 8', 9, 9' into circumferentially uninterrupted rings, safeguarding the structural strength of the braking band 2.

As shown in the drawings, the channel 10, 10' comprises at least one first portion 20 which extends around a first orbit 21 about an axis of symmetry s of the disk 1, and at least one second portion 22 which extends around a second orbit 23 about the axis of symmetry s, radially spaced from the first orbit 21, the first and second portions 20 and 22 being connected by connecting portions 24 which are shorter than the first portion 20, bringing about a division of the plates 3, 3' into rings with radial steps.

The term "orbit" is intended to define a path about the axis of symmetry s of the braking band which does not leave the lateral surface 8, 8', 9, 9' and which has a continuous concavity, viewed from the axis of symmetry s. In other words, the curvature of the orbits never changes sign and tangents to the same orbit do not intersect that orbit at any point.

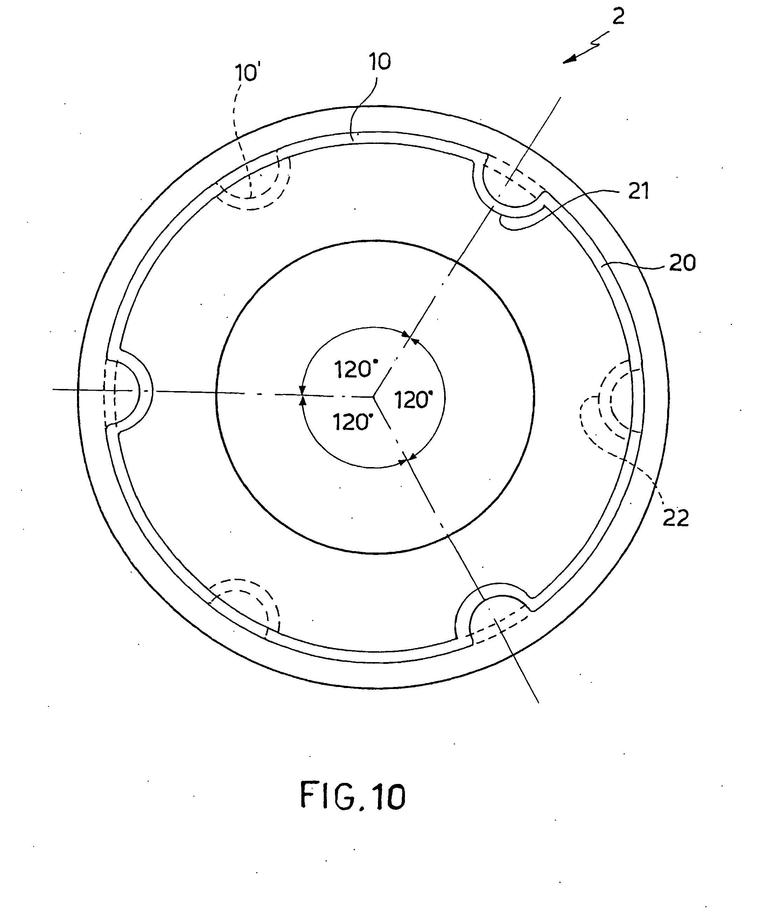

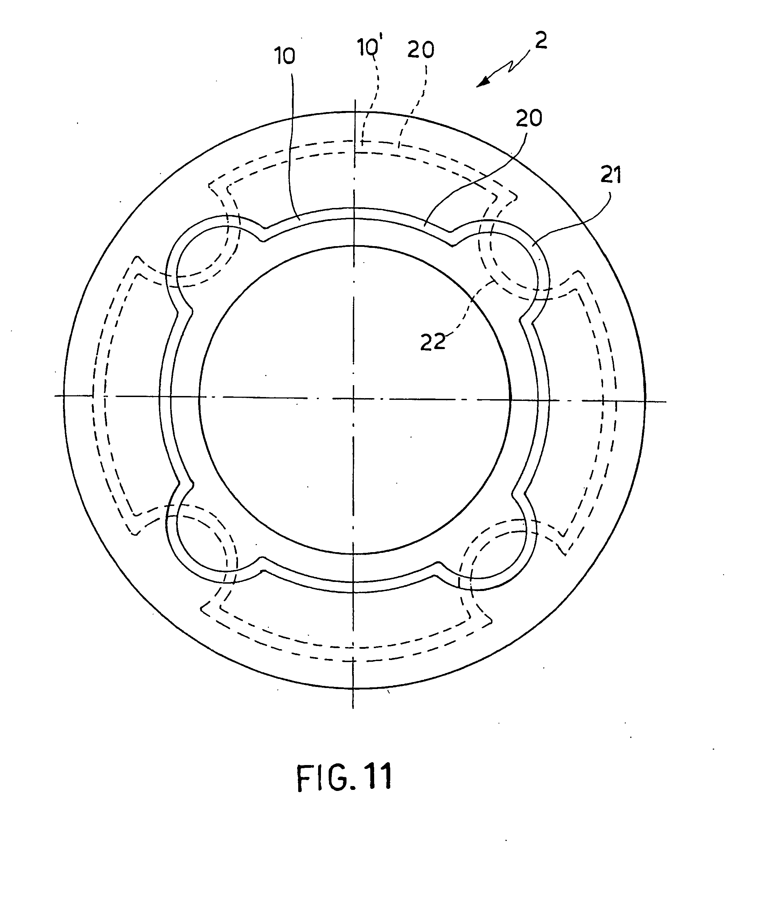

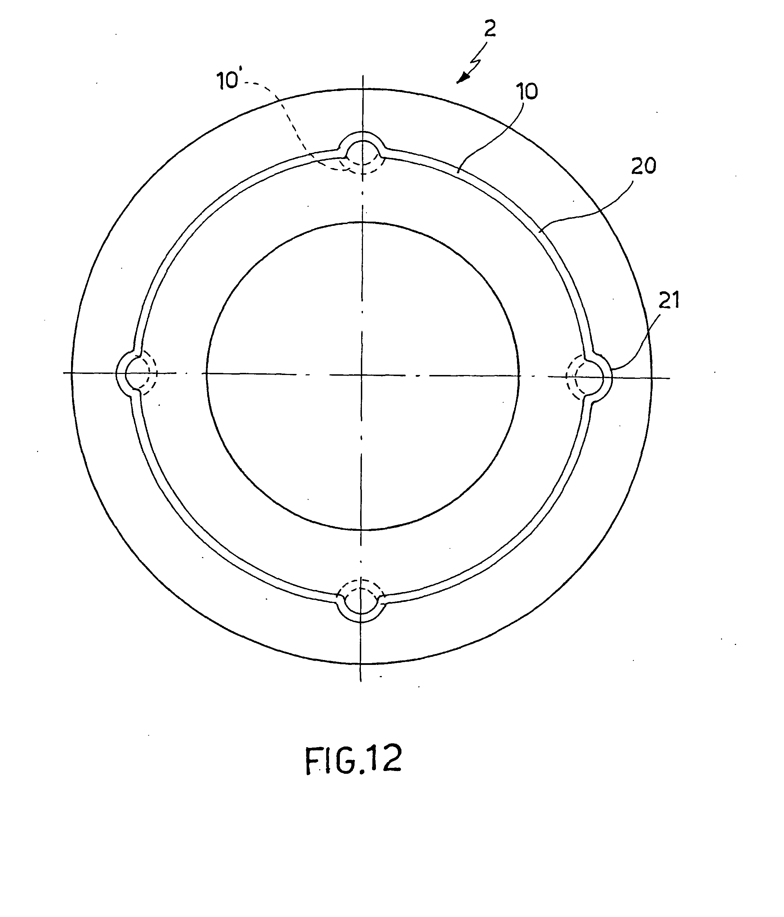

According to one embodiment, the second portions 22 are shorter than the first portions 20. At the limit, the length of the second portions 22 may be reduced to a single point at which the channel 10, 10' just touches the second orbit 23, as can be seen, for example, from Figures 10, 11 or 12.

According to a further embodiment of the invention, the connecting portions 24 are shorter than both the first portions 20 and the second portions 22.

According to one embodiment of the invention, the first and second orbits 21 and 23 of the same channel 10, 10' are circles concentric with the axis of symmetry s and the radius of the first orbit 21 is less than that of the second orbit 23.

According to a further embodiment, in the same channel 10, 10', there is an equal number of first portions 20 and of second portions 22, arranged in alternation with one another circumferentially, and preferably but not necessarily at regular angular intervals.

According to the preferred embodiment, shown, for example, in Figure 1, the channel 10, 10' has precisely two first portions 20 and two second portions 22 arranged alternately and at substantially regular angular intervals.

Naturally, the channel 10, 10' may also be constituted by a single first portion 20 and a single second portion 22, or by an equal number of first and second portions, e.g. three first and second portions, arranged alternately and, preferably, at substantially regular angular intervals, as shown, for example, in Figure 10.

The connecting portions 24 between the first portions 20 and the second portions 22 of the channels 10, 10' have a limited length, preferably corresponding to an angular extent about the axis of symmetry s of between 0° and 15°, preferably 6°, and define, with the adjacent first and second portions 20 and 22, a step preferably at an obtuse angle. In other words, the channels 10, 10' continue in the circumferential direction relative to the braking band 2, preferably without reversals of direction.

According to the preferred embodiment, the connecting portions 24 are substantially straight and are radiused at their junctions with the adjacent first and second portions 20 and 22. Alternatively, the connecting portions 24 may also be in the form of substantially S-shaped, clothoids.

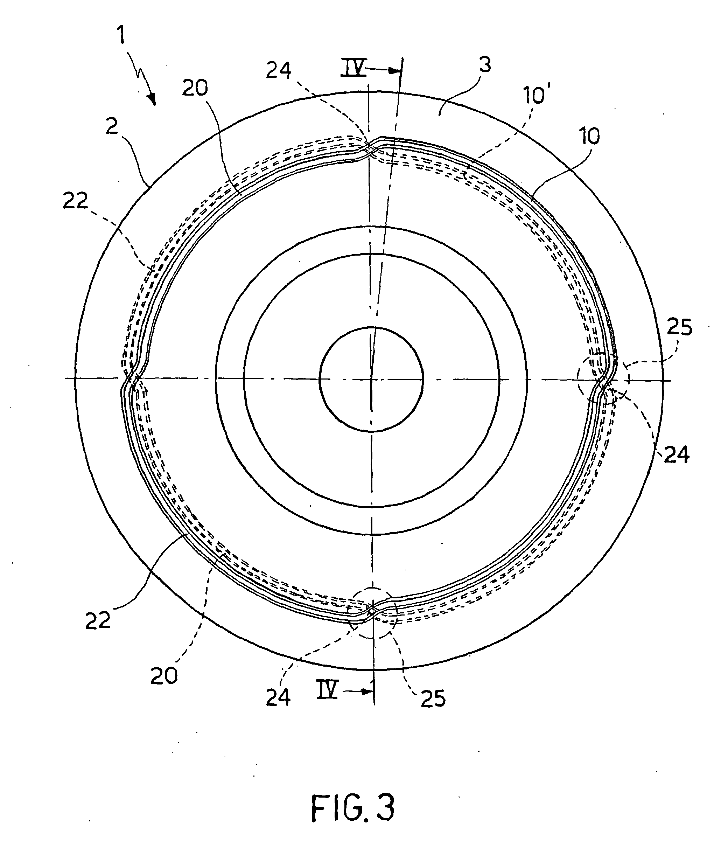

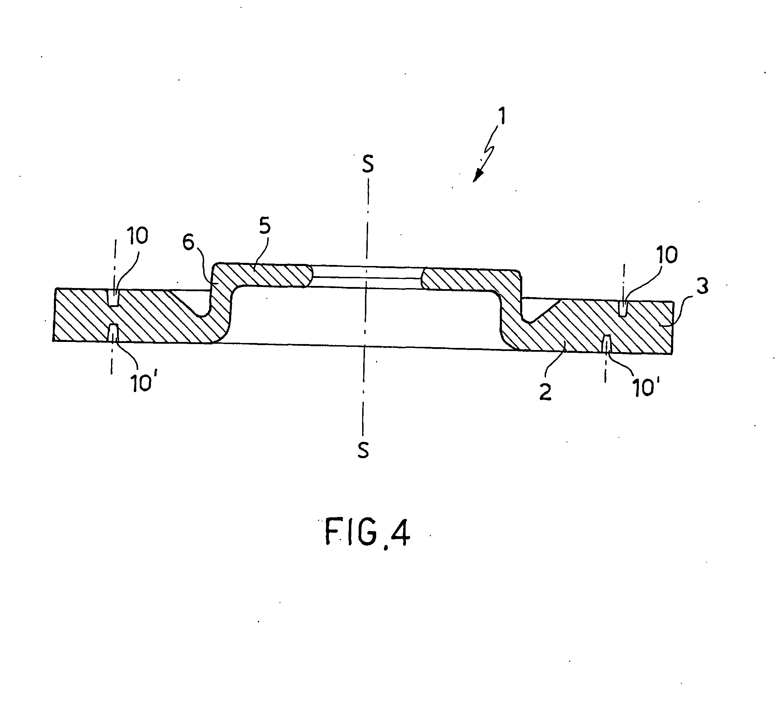

Figures 3 and 4 show a solid brake disk 1 with a braking band 2 comprising a plate 3 the parallel lateral surfaces of which constitute the outer friction surfaces 9, 9' of the brake disk 1. A first outer friction surface 9 of the outer surfaces 9, 9' comprises a first channel 10 of the channels 10, 10' and a second outer friction surface 9' of the outer surfaces 9, 9' comprises a second channel 10' of the channels 10, 10', the first channel 10 and the second channel 10' preferably having substantially reflectively symmetrical shapes with respect to the median plane of the braking band.

According to a further embodiment, shown, for example, in Figure 3, the first channel 10 is disposed in an offset angular position about the axis of symmetry s, relative to the angular position of the second channel 10', so that, in a front view of the braking band 2, the angular positions of the first portions 20 of the first channel 10 correspond to the angular positions of the second portions 22 of the second channel 10' and vice versa, and the channels 10, 10' are superimposed in the region of their connecting portions 24.

Advantageously, the first channel 10 and the second channel 10' are offset by about 180°, forming an inertially balanced braking band.

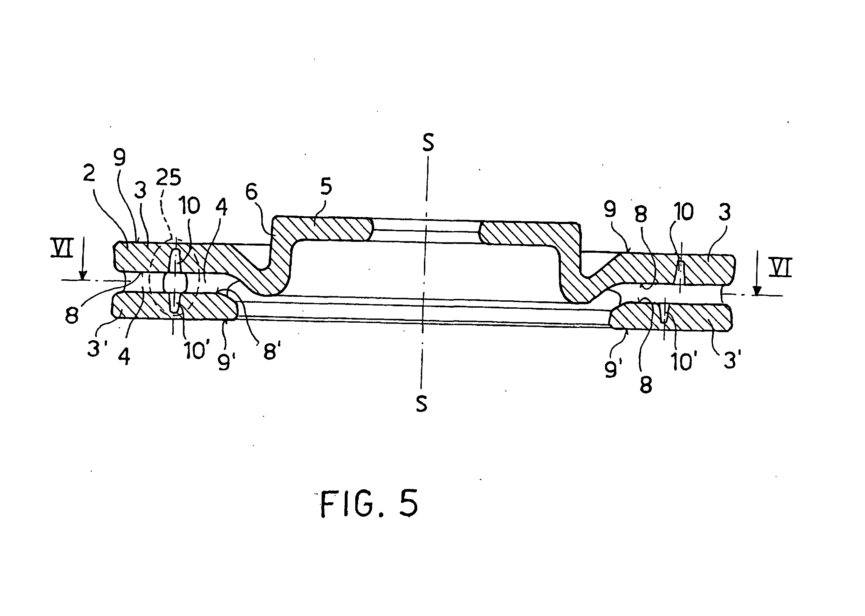

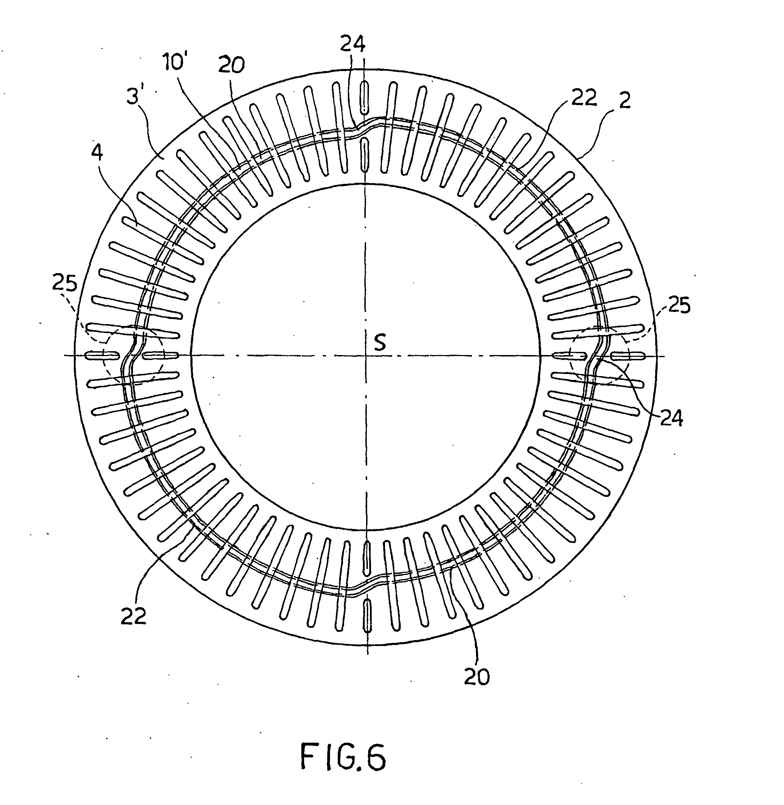

Figures 5 and 6 show a self-ventilated brake disk 1 the braking band 2 of which comprises two plates 3, 3' connected to one another by fin-like connecting elements 4. Each of the plates 3, 3' has two parallel lateral surfaces 8, 9, 8', 9' of which one constitutes one of the two outer friction surfaces 9, 9' and the other constitutes one of the two inner surfaces 8, 8' delimiting the ventilation duct 7 of the brake disk, respectively. A first inner surface 8 of the inner surfaces 8, 8' comprises a first channel 10 of the channels 10, 10' and a second inner surface 8' of the inner surfaces 8, 8' comprises a second channel 10' of the channels 10, 10', the first channel 10 and the second channel 10' preferably having a substantially reflectively symmetrical shape and, according to a further embodiment of the invention, an angularly offset arrangement similar to that described with reference to Figures 3 and 4.

The connecting elements 4 between the plates 3 and 3' of the braking band 2 may be of any number and cross-section suitable for ensuring both a rigid connection between the plates 3, 3' and the cooling air-flow 12 within the ventilation duct 7. In the embodiment shown in Figures 5 and 6, the two plates 3 and 3' are connected by means of shaped fins 4 which define a plurality of substantially radial ventilation ducts, relative to the rotation axis s.

In the regions of intersection between the channels 10, 10' and the fins 4, the channels 10, 10' extend beneath the fins 4, with the exception of the regions 25 in which the two channels 10 and 10' are superimposed, where the connecting fins 4 are preferably interrupted, as shown, for example, in Figure 5.

In the embodiment shown in Figure 4, the channels 10, 10' have a depth less than the thickness of the plate 3 of the solid brake disk and are formed in its outer friction surfaces 9, 9'.

In the embodiment of Figure 5, the channels 10, 10' have depths less than the thicknesses of the plates 3, 3' of the self-ventilated brake disk and are formed in the inner surfaces 8, 8' delimiting the ventilation duct 7.

Naturally, in a self-ventilated brake disk, the channels 10, 10' may also advantageously be formed in the outer friction surfaces 9, 9', as for the solid disk or, according to an alternative embodiment, in both lateral surfaces 8, 9, 8', 9' of the same plate 3, 3'. In other words, the channels may be formed both in the friction surfaces and in the surfaces delimiting the ventilation duct.

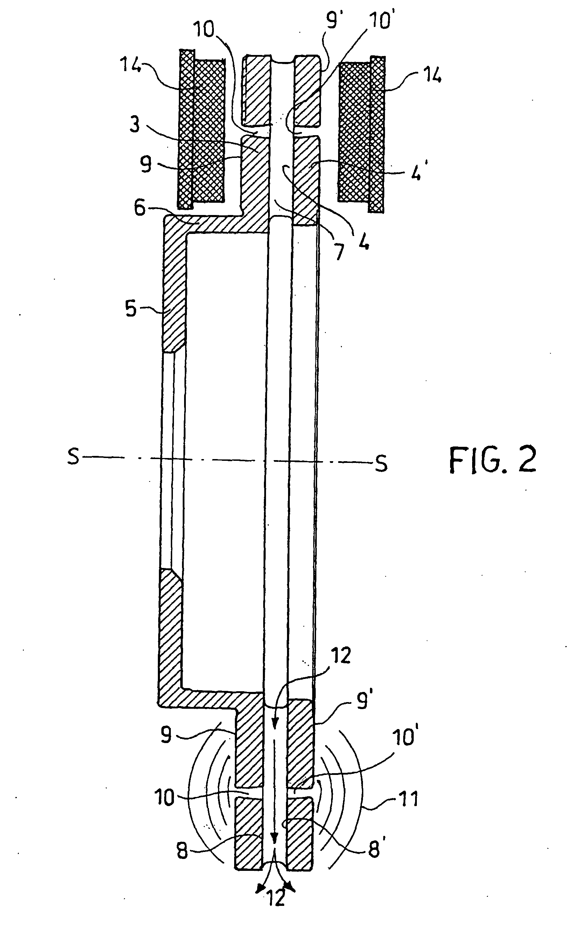

According to the embodiment shown in Figures 1 and 2, the channels 10, 10' have a depth such as to extend completely through the plates 3, 3', extending from the inner surfaces 8, 8' to the outer surfaces 9, 9' of the plates, dividing them into separate rings.

The channels 10, 10' advantageously have a substantially trapezoidal cross-section.

In the embodiment shown in Figure 2, the channels 10, 10' widen out towards the ventilation duct 7 and are rounded in the region of the outer and inner surfaces 9, 9', 8, 8'.

In the embodiment shown in Figure 4, the channels in the outer friction surfaces 9, 9' of the solid disk widen out towards the outer friction surfaces.

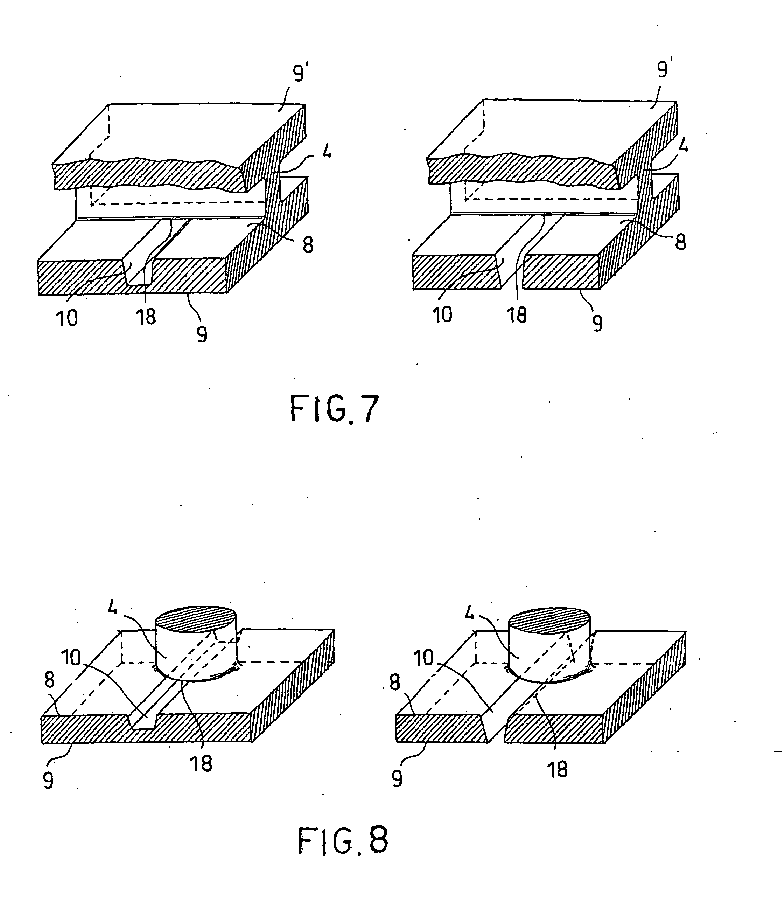

Figures 7 and 8 show, by way of non-limiting example, possible embodiments of the region of intersection between the connecting elements 4 and the channels 10 within the ventilation duct 7 of a self-ventilated braking band.

The angles 18 in the regions of intersection between the channels 10 and the connecting elements 4 are advantageously rounded.

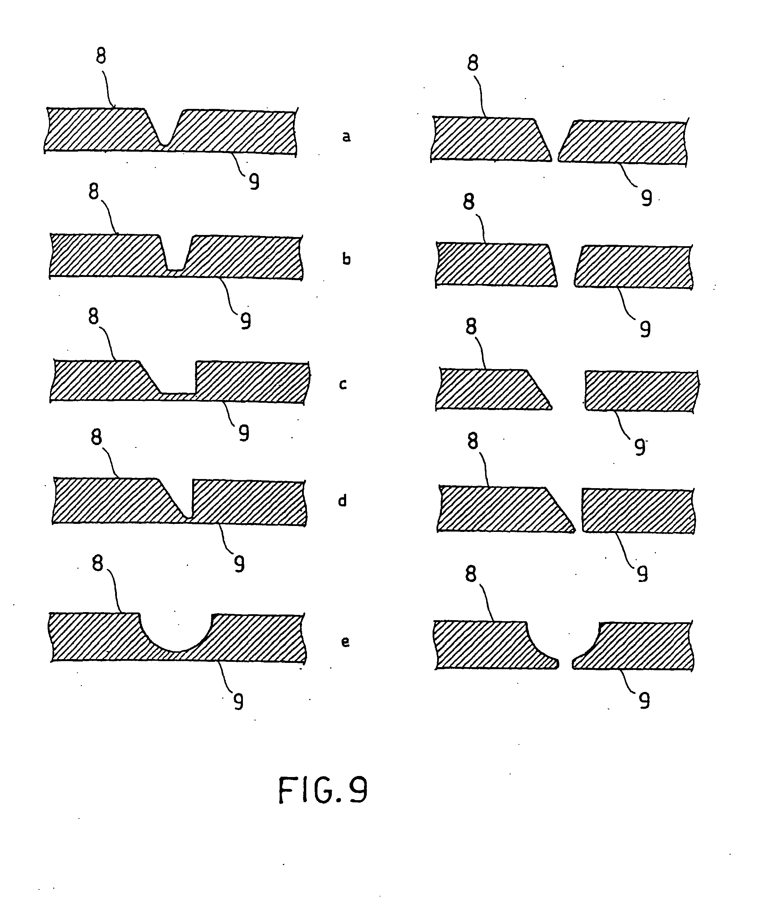

Figure 9 shows profiles of cross-sections of the channels 10, 10' which are particularly, suitable for local variation of the stiffness of the plates 3, 3', with the purpose of reducing the noisiness of the brake disk 1 during braking. The channels advantageously define cavities of trapezoidal shape, in cross-section, according to Figures 9a to 9d. This particular shape allows the structural discontinuities to be concentrated in a targeted manner along the desired lines.

One embodiment of the present invention provides for the oblique sides of the trapezium to be inclined to the longer base at an angle of between 15° and 90°. More advantageously, the oblique sides are inclined to the longer base at an angle of between 45° and 90°. Test results show an unusual quietness during braking if the oblique sides are inclined to the longer base of the trapezium at an angle of 85°.

Figure 9b shows the preferred embodiment, according to which the channels have the shape of an isosceles trapezium in cross-section. It can also be seen from Figures 9a to 9e that the corners of the channels are rounded.

In the self-ventilated brake disk, both the channels 10, 10' in the inner surfaces 8, 8' of the plates 3, 3' and those extending from the inner surfaces 8, 8' to the outer friction surfaces 9, 9' are advantageously produced by casting, by means of respective protuberances on the surface of a casting core.

The operation of a brake disk 1 with the braking band 2 according to the invention is described below with reference to Figure 2.

During braking, the pads 14 are urged against the outer friction surfaces 9, 9' of the braking band 2 of the brake disk 1. The friction process induces vibration of the disk which is translated into sound waves 11. The amplitude of the vibration excited increases as the excitation frequency approaches one of the natural frequencies of the disk, and fades away as the excitation frequency moves away from the natural frequencies of the disk. By modifying the stiffness of the braking band 2 by means of the characteristics described and illustrated, it is possible to modify the natural frequencies of the disk, shifting them away from the frequencies that are excited during braking. This results in a fading-away of the vibrations induced, and hence of the sound waves 11. It has been found that the particular shape of the channels 10, 10', that is, the fact that they extend along at least two orbits with different radii, dividing the plates of the braking band into rings with steps of radial extent, leads to an unusual sound-damping effect.

Figures 10 to 12 show further embodiments of the channels 10, 10', as well as of their arrangement in the two outer friction surfaces 9, 9' or, for the self-ventilated braking band, in the inner surfaces 8, 8' defining the ventilation duct 7.

A braking band for a disk-brake disk according to the invention has many advantages.

The particular shape of the channels leads to an unusual sound-damping effect, greatly attenuating the amplitude of both radial and circumferential vibration modes.

When the channels have a depth less than the thickness of the plates and are entirely inside a self-ventilated braking band and do not therefore affect the braking surfaces on the outside of the braking band, the channels can be formed precisely in the desired positions and with the size most suitable for the purpose of advantageously modifying the dynamic characteristics of the brake disk, without affecting the friction process between the surfaces of the disk and of the pads which are in contact during braking.

The arrangement of the channels in the surfaces delimiting the ventilation duct inside the braking band also permits easy machining of the outer surfaces and the omission of the machining necessary to produce the channels on the outside, with clear savings in time and costs.

The production of the channels by casting by means of protuberances on the outer surface of a casting core avoids incision of the connecting elements between the plates, which is inevitable during the production of the channels from the outside. Both the formation of sharp edges and weakening of the connecting elements are thus avoided.

The production of the channels in the desired shape and arrangement in the inner surfaces delimiting the ventilation duct and remote from the outer friction surfaces avoids both the use of special pads and the deposition of abraded material, as occurs in the channels of the prior art.

A further advantage of the present invention relates to the cooling of brake disks with self-ventilated braking bands. In fact, it has been seen that, as well as increasing the cooling surfaces, the channels in the surfaces delimiting the ventilation duct inside the braking band also create turbulence in the air-flow which in turn favours the thermal exchange between the plates and the air, thus achieving an improvement in the cooling of the disk.

With channels which extend through the entire thickness of the plates of a self-ventilated braking band, the particular shape of their cross-sections which are tapered towards the friction surface of the braking band, prevents the deposition of abraded material from the pads and favours the breaking-up of material projecting from the pads. Uneven wear of the pads is consequently prevented.

By virtue of the connecting portions which, upon each revolution of the brake disk, perform at least one radial outward and return travel across a predetermined region of the braking surfaces 9, 9', the friction surfaces of the pads 14 are restored, also favouring even wear thereof.

Naturally, in order to satisfy contingent and specific requirements, a person skilled in the art may apply to the braking band according to the present invention further modifications and variations all of which, however, are included within the scope of protection of the invention as defined by the appended claims.

## Claims

1. A braking band (2) for a disk-brake disk (1), comprising at least one plate (3, 3') which has, in at least one of its lateral surfaces (8, 8', 9, 9'), at least one substantially annular channel (10, 10') which divides the lateral surface (8, 8', 9, 9') into circumferentially uninterrupted rings, wherein the channel (10, 10') comprises at least one first portion (20) which extends along a first orbit (21) about an axis of symmetry (s) of the disk (1) and at least one second portion (22) which extends along a second orbit (23) about the axis of symmetry (s), the second orbit (23) being radially spaced from the first orbit (21) and the first and second portions (20, 22) of the channel (10, 10') being connected by connecting portions (24), **characterized in that** the first and second orbits (21, 23) have a continuous substantially concave shape, viewed from the axis of symmetry (s), and said connecting portions (24) are shorter than said first portion (20), wherein the first orbit (21) and the second orbit (23) of the same channel (10, 10') are circles concentric with the axis of symmetry (s).

2. A braking band (2) according to Claim 1 in which the second portion (22) is shorter than the first portion (20).

3. A braking band (2) according to Claim 1 or Claim 2 in which the connecting portions (24) are shorter than both the first portion (20) and the second portion (22).

4. A braking band (2) according to any one of the preceding claims, in which the radius of the first orbit (21) is less than that of the second orbit (23).

5. A braking band (2) according to any one of Claims 1 to 4 in which, in the same channel (10, 10'), there is an equal number of first portions (20) and of second portions (22), arranged alternately circumferentially.

6. A braking band (2) according to any one of Claims 1 to 5 in which the first portions (20) and the second portions (22) of the same channel (10, 10') extend substantially at regular angular intervals.

7. A braking band (2) according to any one of Claims 1 to 6 in which the channel (10, 10') has two first portions (20) and two second portions (22).

8. A braking band (2) according to any one of Claims 1 to 7 in which the connecting portions (24) between the first portions (20) and the second portions (22) are substantially straight.

9. A braking band (2) according to any one of Claims 1 to 8 in which the connecting portions (24) between the first portions (20) and the second portions (22) have an angular extent about the axis of symmetry (s) of between 0° and 15°, preferably of 6°.

10. A braking band (2) according to any one of the preceding claims, comprising a single plate (3) with two opposed lateral surfaces (9, 9') constituting outer friction surfaces (9, 9') of the braking band, in which at least one of the outer friction surfaces (9, 9') comprises one of the channels (10, 10').

11. A braking band (2) according to any one of Claims 1 to 9, comprising at least two plates (3, 3') connected to one another by connecting elements (4) to form, internally, a cooling ventilation duct (7), in which the lateral surfaces (8, 8', 9, 9') of the plates (3, 3') comprise inner surfaces (8, 8') delimiting the ventilation duct (7), and outer friction surfaces (9, 9').

12. A braking band (2) according to Claim 11 in which at least one of the outer friction surfaces (9, 9') comprises one of the channels (10, 10').

13. A braking band (2) according to Claim 11 or Claim 12 in which at least one of the inner surfaces (8, 8') comprises one of the channels (10, 10').

14. A braking band (2) according to one of Claims 10 to 13 in which a first channel (10) of the channels (10, 10') is disposed in one of the two outer friction surfaces (9, 9') and a second channel (10') of the channels (10, 10') is disposed in the other of the two outer friction surfaces (9, 9'), and the first channel (10) and the second channel (10') have a substantially reflectively symmetrical shape with respect to a median plane of the braking band 2.

15. A braking band (2) according to Claim 11 in which a first channel (10) of the channels (10, 10') is disposed in one of the inner surfaces (8, 8') delimiting the ventilation duct (7) and a second channel (10') of the channels (10, 10') is disposed in the other of the inner surfaces (8, 8') and the first channel (10) and the second channel (10') have a substantially reflectively symmetrical shape with respect to a median plane of the braking band 2.

16. A braking band (2) according to Claim 14 or Claim 15 in which the first channel (10) is disposed in an offset angular position about the axis of symmetry (s), relative to the angular position of the second channel (10').

17. A braking band (2) according to Claim 16 in which the first channel (10) and the second channel (10') are offset in a manner such that, in a front view of the braking band (2), the angular position of one of the first portions (20) of the first channel (10) corresponds to the angular position of one of the second portions (22) of the second channel (10') and vice versa, and the connecting portions (24) of the channels (10, 10') are superimposed.

18. A braking band (2) according to Claim 17 in which the first channel (10) and the second channel (10') are offset by about 180°, forming an inertially balanced braking band.

19. A braking band (2) according to any one of the preceding claims in which at least one of the channels (10, 10') has a depth less than the thickness of the plate (3, 3') in the lateral surface (8, 8', 9, 9') of which it is formed.

20. A braking band according to any one of the preceding claims in which at least one of the channels (10, 10') has a depth such as to extend completely through the plate (3, 3') in the lateral surface (8, 8', 9, 9') of which it is formed.

21. A braking band (2) according to Claim 11 in which the channels (10, 10') in the inner surfaces (8, 8') extend beneath the connecting elements (4).

22. A braking band (2) according to any one of the preceding claims in which the channels (10, 10') have a trapezoidal shape in cross-section.

23. A braking band according to Claim 22 in which the oblique sides of the trapezium are inclined to the longer base at angle of between 15° and 90°.

24. A braking band (2) according to Claim 22 in which the channels (10, 10') have the shape of an isosceles trapezium in cross-section.

25. A braking band for a disk-brake disk according to Claim 24 in which the oblique sides of the trapezium are inclined to the longer base at an angle of 85°.

26. A braking band according to any one of the preceding claims in which the corners of the channels (10, 10') are rounded.

27. A disk-brake disk comprising a braking band (2) according to any one of the preceding claims.

28. A disk brake comprising a disk-brake disk (1) according to Claim 27.

## Patentansprüche

1. Bremsband (2) für eine Scheibenbremsenscheibe (1), umfassend zumindest eine Platte (3, 3'), die in zumindest einer ihrer seitlichen Oberflächen (8, 8', 9, 9') zumindest einen im Wesentlichen ringförmigen Kanal (10, 10') aufweist, der die seitliche Oberfläche (8, 8', 9, 9') in umfänglich ununterbrochene Ringe teilt, wobei der Kanal (10, 10') zumindest einen ersten Abschnitt (20) umfasst, der sich entlang einer ersten Umlaufbahn (21) um eine Symmetrieachse (s) der Scheibe (1) erstreckt, und zumindest einen zweiten Abschnitt (22) umfasst, der sich entlang einer zweiten Umlaufbahn (23) um die Symmetrieachse (s) erstreckt, wobei die zweite Umlaufbahn (23) von der ersten Umlaufbahn (21) radial beabstandet ist und der erste und der zweite Abschnitt (20, 22) des Kanals (10, 10') durch Verbindungsabschnitte (24) verbunden sind, **dadurch gekennzeichnet, dass** die erste und die zweite Umlaufbahn (21, 23) von der Symmetrieachse (s) her betrachtet eine fortlaufende, im Wesentlichen konkave Form aufweisen, und die Verbindungsabschnitte (24) kürzer als der erste Abschnitt (20) sind, wobei die erste Umlaufbahn (21) und die zweite Umlaufbahn (23) des gleichen Kanals (10, 10') Kreise sind, die mit der Symmetrieachse (s) konzentrisch sind.

2. Bremsband (2) gemäß Anspruch 1, wobei der zweite Abschnitt (22) kürzer als der erste Abschnitt (20) ist.

3. Bremsband (2) gemäß Anspruch 1 oder Anspruch 2, wobei die Verbindungsabschnitte (24) kürzer als sowohl der erste Abschnitt (20) als auch der zweite Abschnitt (22) sind.

4. Bremsband (2) gemäß einem der vorhergehenden Ansprüche, wobei der Radius der ersten Umlaufbahn (21) kleiner als jener der zweiten Umlaufbahn (23) ist.

5. Bremsband (2) gemäß einem der Ansprüche 1 bis 4, wobei im gleichen Kanal (10, 10') eine gleiche Anzahl von ersten Abschnitten (20) und zweiten Abschnitten (22) vorhanden ist, die umfänglich abwechselnd angeordnet sind.

6. Bremsband (2) gemäß einem der Ansprüche 1 bis 5, wobei sich die ersten Abschnitte (20) und die zweiten Abschnitte (22) des gleichen Kanals (10, 10') im Wesentlichen in regelmäßigen Winkel - Abständen erstrecken.

7. Bremsband (2) gemäß einem der Ansprüche 1 bis 6, wobei der Kanal (10, 10') zwei erste Abschnitte (20) und zwei zweite Abschnitte (22) aufweist.

8. Bremsband (2) gemäß einem der Ansprüche 1 bis 7, wobei die Verbindungsabschnitte (24) zwischen den erst.en Abschnitten (20) und den zweiten Abschnitten (22) im Wesentlichen gerade sind.

9. Bremsband (2) gemäß einem der Ansprüche 1 bis 8, wobei die Verbindungsabschnitte (24) zwischen den ersten Abschnitten (20) und den zweiten Abschnitten (22) eine Winkel - Ausdehnung um die Symmetrieachse (s) von zwischen 0 ° und 15 °, und vorzugsweise von 6 ° aufweisen.

10. Bremsband (2) gemäß einem der vorhergehenden Ansprüche, umfassend eine einzelne Platte (3) mit zwei entgegengesetzten seitlichen Oberflächen (9, 9'), die äußere Reiboberflächen (9, 9') des Bremsbands (2) schaffen, wobei zumindest eine der äußeren Reiboberflächen (9, 9') einen der Kanäle (10, 10') umfasst.

11. Bremsband (2) gemäß einem der Ansprüche 1 bis 9, umfassend zumindest zwei Platten (3, 3'), die durch Verbindungselemente (4) miteinander verbunden sind, um im Inneren einen Kühlbelüftungskanal (7) zu bilden, wobei die seitlichen Oberflächen (8, 8', 9, 9') der Platten (3, 3') innere Oberflächen (8, 8'), die den Belüftungskanal (7) begrenzen, und äußere Reiboberflächen (9, 9') umfassen.

12. Bremsband (2) gemäß Anspruch 11, wobei zumindest eine der äußeren Reiboberflächen (9, 9') einen der Kanäle (10, 10') umfasst.

13. Bremsband (2) gemäß Anspruch 11 oder Anspruch 12, wobei zumindest eine der inneren Oberflächen (8, 8') einen der Kanäle (10, 10') umfasst.

14. Bremsband (2) gemäß einem der Ansprüche 10 bis 13, wobei ein erster Kanal (10) der Kanäle (10, 10') in einer der beiden äußeren Reiboberflächen (9, 9') angeordnet ist, und ein zweiter Kanal (10') der Kanäle (10, 10') in der anderen der beiden äußeren Reiboberflächen (9, 9') angeordnet ist, und der erste Kanal (10) und der zweite Kanal (10') eine im Wesentlichen spiegelsymmetrische Form in Bezug auf eine Median Ebene des Bremsbands (2) aufweisen.

15. Bremsband (2) gemäß Anspruch 11, wobei ein erster Kanal (10) der Kanäle (10, 10') in einer der inneren Oberflächen (8, 8'), die den Belüftungskanal (7) begrenzen, angeordnet ist, und ein zweiter Kanal (10') der Kanäle (10, 10') in der anderen der inneren Oberflächen (8, 8') angeordnet ist, und der erste Kanal (10) und der zweite Kanal (10') eine im Wesentlichen spiegelsymmetrische Form in Bezug auf eine Median Ebene des Bremsbands (2) aufweisen.

16. Bremsband (2) gemäß Anspruch 14 oder Anspruch 15, wobei der erste Kanal (10) in Bezug auf die Winkel - Position des zweiten Kanals (10') in einer um die Symmetrieachse (s) versetzten Winkel - Position angeordnet ist.

17. Bremsband (2) gemäß Anspruch 16, wobei der erste Kanal (10) und der zweite Kanal (10') in einer solchen Weise versetzt sind, dass die Winkel - Position eines der ersten Abschnitte (20) des ersten Kanals (10) in einer Vorderansicht des Bremsbands (2) der Winkel - Position eines der zweiten Abschnitte (22) des zweiten Kanals (10') entspricht, und umgekehrt, und die Verbindungsabschnitte (24) der Kanäle (10, 10') übereinandergelegt sind.

18. Bremsband (2) gemäß Anspruch 17, wobei der erste Kanal (10) und der zweite Kanal (10') um etwa 180 ° versetzt sind, wodurch ein von der Trägheit her ausgeglichenes Bremsband gebildet wird.

19. Bremsband (2) gemäß einem der vorhergehenden Ansprüche, wobei zumindest einer der Kanäle (10, 10') in der seitlichen Oberfläche (8, 8', 9, 9'), aus der er gebildet ist, eine Tiefe aufweist, die geringer als die Dicke der Platte (3, 3') ist.

20. Bremsband gemäß einem der vorhergehenden Ansprüche, wobei zumindest einer der Kanäle (10, 10') in der seitlichen Oberfläche (8, 8', 9, 9'), aus der er gebildet ist, eine solche Tiefe aufweist, dass er sich völlig durch die Platte (3, 3') erstreckt.

21. Bremsband (2) gemäß Anspruch 11, wobei sich die Kanäle (10, 10') in den inneren Oberflächen (8, 8') unter die Verbindungselemente (4) erstrecken.

22. Bremsband (2) gemäß einem der vorhergehenden Ansprüche, wobei die Kanäle (10, 10') im Querschnitt eine trapezförmige Form aufweisen.

23. Bremsband gemäß Anspruch 22, wobei die schrägen Seiten des Trapezes in einem Winkel von zwischen 15 ° und 90 ° zur längeren Basis geneigt sind.

24. Bremsband (2) gemäß Anspruch 22, wobei die Kanäle (10, 10') im Querschnitt die Form eines gleichschenkligen Trapezes aufweisen.

25. Bremsband für eine Scheibenbremsenscheibe gemäß Anspruch 24, wobei die schrägen Seiten des Trapezes in einem Winkel von 85 ° zur längeren Basis geneigt sind.

26. Bremsband gemäß einem der vorhergehenden Ansprüche, wobei die Ecken der Kanäle (10, 10') abgerundet sind.

27. Scheibenbremsenscheibe, umfassend ein Bremsband (2) gemäß einem der vorhergehenden Ansprüche.

28. Scheibenbremse, umfassend eine Scheibenbremsenscheibe (1) gemäß Anspruch 27.

## Revendications

1. Bande de freinage (2) pour un disque de frein à disque (1), comprenant au moins une plaque (3, 3') qui a, dans au moins une de ses surfaces latérales (8, 8', 9, 9'), au moins un canal (10, 10') sensiblement annulaire qui divise la surface latérale (8, 8', 9, 9') en anneaux interrompus le long de leur circonférence, dans laquelle le canal (10, 10') comprend au moins une première partie (20) qui s'étend le long d'une première orbite (21) autour d'un axe de symétrie (s) du disque (1) et au moins une seconde partie (22) qui s'étend le long d'une seconde orbite (23) autour de l'axe de symétrie (s), la seconde orbite (23) étant radialement écartée de la première orbite (21) et les première et seconde parties (20, 22) du canal (10, 10') étant reliées par des parties de raccordement (24), **caractérisée en ce que** les première et seconde orbites (21, 23) ont une forme continue sensiblement concave, vues depuis l'axe de symétrie (s) et **en ce que** lesdites parties de raccordement (24) sont plus courtes que ladite première partie (20), dans laquelle les première orbite (21) et seconde orbite (23) du même canal (10, 10') sont des cercles concentriques autour de l'axe de symétrie (s).

2. Bande de freinage (2) selon la revendication 1, dans laquelle la seconde partie (22) est plus courte que la première partie (20).

3. Bande de freinage (2) selon la revendication 1 ou la revendication 2, dans laquelle les parties de raccordement (24) sont plus courtes à la fois que la première partie (20) et que la seconde partie (22).

4. Bande de freinage (2) selon l'une quelconque des revendications précédentes, dans laquelle le rayon de la première orbite (21) est inférieur à celui de la seconde orbite (23).

5. Bande de freinage (2) selon l'une quelconque des revendications 1 à 4, dans laquelle, dans le même canal (10, 10') s'étendent sensiblement, il y a un nombre égal de premières parties (20) et de secondes parties (22) disposées en alternance le long de la circonférence.

6. Bande de freinage (2) selon l'une quelconque des revendications 1 à 5, dans laquelle les premières parties (20) et les secondes parties (22) du même canal (10, 10') à des intervalles angulaires sensiblement réguliers.

7. Bande de freinage (2) selon l'une quelconque des revendications 1 à 6, dans laquelle le canal (10, 10') a deux premières parties (20) et deux secondes parties (22).

8. Bande de freinage (2) selon l'une quelconque des revendications 1 à 7, dans laquelle les parties de raccordement (24) entre les premières parties (20) et les secondes parties (22) sont sensiblement droites.

9. Bande de freinage (2) selon l'une quelconque des revendications 1 à 8, dans laquelle les parties de raccordement (24) entre les premières parties (20) et les secondes parties (22) ont une amplitude angulaire autour de l'axe de symétrie (s) comprise entre 0° et 15°, de préférence de 6°.

10. Bande de freinage (2) selon l'une quelconque des revendications précédentes, comprenant une seule plaque (3) avec deux surfaces latérales opposées (9, 9') constituant les surfaces de frottement extérieures (9, 9') de la bande de roulement, dans laquelle au moins une des surfaces de frottement extérieures (9, 9') comprend un des canaux (10, 10').

11. Bande de freinage (2) selon l'une quelconque des revendications 1 à 9, comprenant au moins deux plaques (3, 3') reliées l'une à l'autre par des éléments de liaison (4) pour former, entre elles, une conduite de ventilation et de refroidissement (7) et dans laquelle les surfaces latérales (8, 8', 9, 9') des plaques (3, 3') comprennent des surfaces (8, 8') délimitant la conduite de ventilation (7) et des surfaces de frottement extérieures (9, 9').

12. Bande de freinage (2) selon la revendication 11, dans laquelle au moins une des surfaces de frottement extérieures (9, 9') comprend un des canaux (10, 10').

13. Bande de freinage (2) selon la revendication 11 ou la revendication 12, dans laquelle au moins une des surfaces intérieures (8, 8') comprend un des canaux (10, 10').

14. Bande de freinage (2) selon l'une des revendications 10 à 13, dans laquelle un premier canal (10) des canaux (10, 10') est disposé dans l'une des deux surfaces de frottement extérieures (9, 9') et un second canal (10') des canaux (10, 10') est disposé dans l'autre des deux surfaces de frottement extérieures (9, 9') et le premier canal (10) et le second canal (10') ont une forme sensiblement symétrique par réflexion par rapport au plan médian de la bande de freinage (2).

15. Bande de freinage (2) selon la revendication 11, dans laquelle un premier canal (10) des canaux (10, 10') est disposé dans l'une des deux surfaces intérieures (8, 8') délimitant la conduite de ventilation (7) et un second canal (10') des canaux (10, 10') est disposé dans l'autre des deux surfaces intérieures (8, 8') et le premier canal (10) et le second canal (10') ont une forme sensiblement symétrique par réflexion par rapport au plan médian de la bande de freinage (2).

16. Bande de freinage (2) selon la revendication 14 ou la revendication 15, dans laquelle le premier canal (10) est disposé dans une position angulaire autour de l'axe de symétrie (s) décalée par rapport à la position angulaire du second canal (10').

17. Bande de freinage (2) selon la revendication 16, dans laquelle le premier canal (10) et le second canal (10') sont décalés de telle manière que, dans une vue de face de la bande de freinage (2), la position angulaire de l'une des premières parties (20) du premier canal (10) correspond à la position angulaire de l'une des secondes parties (22) du second canal (10') et vice-versa et les parties de raccordement (24) des canaux (10, 10') se superposent.

18. Bande de freinage (2) selon la revendication 17, dans laquelle le premier canal (10) et le second canal (10') sont décalés d'environ 180°, formant une bande de freinage équilibrée en inertie.

19. Bande de freinage (2) selon l'une quelconque des revendications précédentes, dans laquelle au moins un des canaux (10, 10') a une profondeur inférieure à l'épaisseur de la plaque (3, 3') dans la surface latérale (8, 8', 9, 9') de laquelle il est formé.

20. Bande de freinage (2) selon l'une quelconque des revendications précédentes, dans laquelle au moins un des canaux (10, 10') a une profondeur telle qu'il traverse complètement la plaque (3, 3') dans la surface latérale (8, 8', 9, 9') de laquelle il est formé.

21. Bande de freinage (2) selon la revendication 11, dans laquelle les canaux (10, 10') dans les surfaces intérieures (8, 8') s'étendent sous les éléments de liaison (4).

22. Bande de freinage (2) selon l'une quelconque des revendications précédentes, dans laquelle les canaux (10, 10') ont une section transversale de forme trapézoïdale.

23. Bande de freinage (2) selon la revendication 22, dans laquelle les côtés obliques du trapèze sont inclinés sur la grande base d'un angle compris entre 15° et 90°.

24. Bande de freinage (2) selon la revendication 22, dans laquelle les canaux (10, 10') ont une section transversale en forme de trapèze isocèle.

25. Bande de freinage (2) selon la revendication 24, dans laquelle les côtés obliques du trapèze sont inclinés sur la grande base d'un angle de 85°.

26. Bande de freinage (2) selon l'une quelconque des revendications précédentes, dans laquelle les coins des canaux (10, 10') sont arrondis.

27. Disque de frein à disque (1) comprenant une bande de freinage (2) selon l'une quelconque des revendications précédentes.

28. Frein à disque comprenant un disque de frein à disque (1) selon la revendication 27.
